# EUROPEAN PATENT APPLICATION

(11) **EP 4 737 540 A1**
(43) Date of publication of application: **06.05.2026**
(21) Application number: 25208667.3
(22) Date of filing: 14.10.2025
(51) Int. Cl.: C10M 137/04, C09K 5/10, H05K 7/20

(54) **ADDITIVE FOR THERMAL MANAGEMENT FLUID, THERMAL MANAGEMENT FLUID COMPOSITION INCLUDING SAME, AND USE THEREOF**

(30) Priority: 30.10.2024 KR 20240150970
(71) Applicant: SK Innovation Co., Ltd., Seoul 03188 (KR); SK On Co., Ltd., Seoul 03161 (KR)
(72) Inventor: LEE, Hong Won, 34124 Daejeon (KR); KIM, Hak Mook, 34124 Daejeon (KR); JUNG, Kang Min, 34124 Daejeon (KR); KIM, Jung Nam, 34124 Daejeon (KR); SHIN, Sang Hye, 34124 Daejeon (KR); LEE, Kwang Kuk, 34124 Daejeon (KR); LEE, Joo Hyun, 34124 Daejeon (KR)
(74) Representative: Prüfer & Partner mbB Patentanwälte · Rechtsanwälte

(57) **Abstract**

Proposed are an additive for a thermal management fluid, the additive including a phosphate-based compound, and a thermal management fluid composition including the same.

## Description

### BACKGROUND

### 1. Technical Field

The present disclosure relates to an additive for a thermal management fluid and a thermal management fluid composition including the same. The present disclosure further relates to the use of an additive for a thermal management fluid, respectively for cooling and heating systems.

### 2. Description of the Related Art

Thermal management fluids, which are fluids used for efficient thermal transfer and control, are mainly used in cooling and heating systems.

Coolants serve to reduce the temperature of a heat source by absorbing heat generated from the pyrogen. A substance that exhibits high thermal efficiency, low viscosity, low cost, non-toxicity, and chemical stability, while not causing corrosion of devices, is desirable as a coolant.

With the performance enhancement of various electronics, such as electric vehicles, these electronics generate more and more heat during use. To facilitate product use and prevent shortened product life, control of the heat generated in such products must be taken into account.

Immersion cooling is one of the cooling methods used for thermal management of electronic devices and computer systems. Immersion cooling allows an electronic device to make direct contact with fluids for cooling and thus is capable of effective heat removal compared to existing air cooling or water cooling methods.

### [Related art]

### [Patent Document]

(Patent Document 1) WO 2023-114449 A1

### SUMMARY

The present disclosure relates to an additive for a thermal management fluid and a thermal management fluid composition including the same.

One aspect of the present disclosure provides an additive for a thermal management fluid, the additive including a phosphate-based compound.

According to one embodiment, the phosphate-based compound satisfies Chemical Formula 1 below, 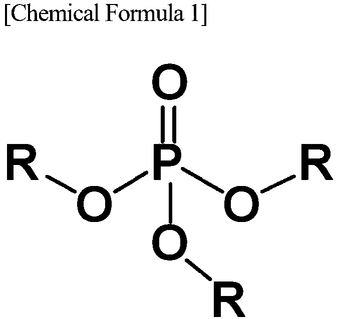 wherein the R groups are each independently hydrogen or a functional group comprising 1 to 10 carbon atoms.

According to one embodiment, at least one of the R groups is the functional group comprising 1 to 10 carbon atoms. Preferably, the R groups may each independently be a linear or a branched alkyl group comprising 1 to 10, more preferably 1 to 8, carbon atoms or an aromatic group comprising 10 or less carbon atoms or 6 or less carbon atoms.

According to one embodiment, the R groups are each independently a functional group comprising 1 to 6 carbon atoms. Preferably, the R groups may each independently be a linear alkyl group comprising 1 to 6 carbon atoms.

According to one embodiment, the R groups further comprise a heteroatom. In an exemplary embodiment, the hetero atom included in one or more of the R groups may be selected from the group consisting of O, N, S, P, B, F, Cl, Br, I, and a combination thereof.

According to one embodiment, the heteroatom is a halogen atom. Preferably, the heteroatom may be F.

According to one embodiment, the additive satisfies ΔFP of 9°C or more, preferably at least 10°C, wherein ΔFP = (a flash point of a fluid including the additive) - (a flash point of a fluid free of the additive).

Another aspect of the present disclosure provides a thermal management fluid composition including: a base oil, and one or more phosphate-based compounds.

According to one embodiment, the phosphate-based compound may be as defined above by [Chemical Formula 1] or the optional or preferred specifications.

According to one embodiment, the composition is applicable for immersion cooling.

According to one embodiment, the base oil is a mineral oil.

According to one embodiment, the base oil has a content of at least 80 wt% with respect to the total weight of the composition.

According to one embodiment, the phosphate-based compound has a content of more than 0 wt% and 10 wt% or less with respect to the total weight of the composition.

According to one embodiment, the composition further includes a second additive that is different from the one or more phosphate-based compounds.

According to one embodiment, the additive includes an antioxidant, an antifoaming agent, a corrosion inhibitor, a detergent additive, a dispersant, a friction modifier, an anti-wear agent, an extreme pressure additive, a viscosity index improver, a pour point depressant, a viscosity modifier, or a combination thereof.

According to a further aspect of the present disclosure, a phosphate-based compound may be used for a thermal management fluid, optionally for cooling and heating systems, in particular for immersion cooling for immersion cooling devices or systems.

According to an embodiment of such use, the phosphate-based compound as defined above by [Chemical Formula 1], or the optional or preferred specifications thereof, may be used.

According to a further aspect of the present disclosure, a phosphate-based compound as defined above by [Chemical Formula 1], or the optional or preferred specifications thereof, may be used to increase the flash point of a fluid composition by adding the compound to a base oil, and/or to reduce the kinematic viscosity of a fluid composition by adding the compound to a base oil.

According to an embodiment of such use, the flash point of a fluid may be increased by at least 9°C or even by at least 10°C, and/or the kinematic viscosity may be reduced by at least 1·10⁻⁶ m²/s (at least 1 cSt) with respect to the fluid composition without the phosphate-based compound at 40°C, measured according to ASTM D445-01.

According to one embodiment, the application of the additive can improve the safety of a thermal management fluid. According to one embodiment, the application of the additive can contribute to reducing the viscosity of a thermal management fluid. According to one embodiment, the application of the additive does not deteriorate the dielectric constant of a thermal management fluid. According to one embodiment, a thermal management fluid to which the additive is applied is usable as an immersion cooling fluid. According to one embodiment, the application of the additive can reduce the amount of power used for cooling because the cooling efficiency can be improved during immersion cooling using a thermal management fluid. As a result, carbon emissions may be reduced.

### BRIEF DESCRIPTION OF THE DRAWINGS

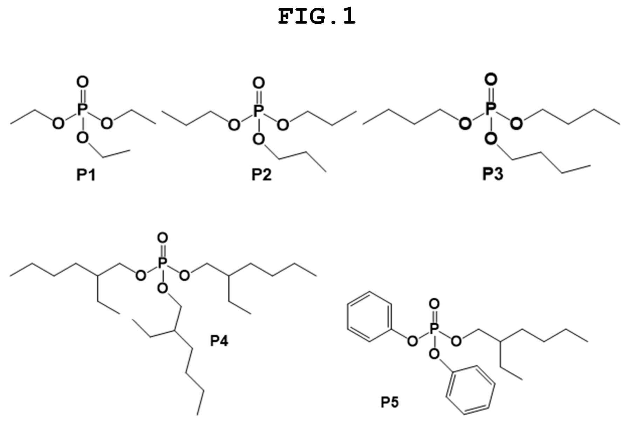

FIG. 1 illustrates structural formulas of phosphate-based compounds according to one embodiment.

### DETAILED DESCRIPTION

Hereinafter, the present disclosure will be described in detail. However, this is only for illustrative purposes, and the present disclosure is not limited to specific embodiments illustrated below.

### Additive for Thermal Management Fluid

The present disclosure provides an additive for a thermal management fluid. The additive includes a phosphate-based compound. Hence, the "additive for a thermal management fluid" in the present disclosure may be used interchangeably with a "phosphate-based additive" or "phosphate-based compound additive". In the present disclosure, the phosphate-based compound refers to a phosphate-containing compound. Specifically, the phosphate-based compound may be an organic phosphate compound. In one embodiment, the additive for a thermal management fluid may be a phosphate-based compound. In another embodiment, the additive for a thermal management fluid may include one or more phosphate-based compounds.

The phosphate-based compound may satisfy Chemical Formula 1 below.

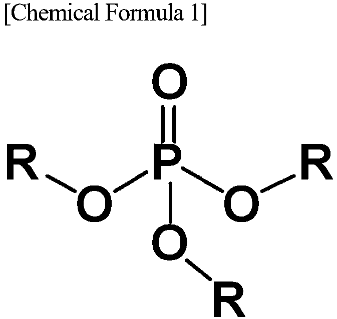

In this case, the three R groups are independent of each other. The R groups may be hydrogen or a functional group having 1 to 10 carbon atoms. Specifically, the R groups may be hydrogen or a functional group having 1 to 8 carbon atoms. More specifically, the R groups may be hydrogen or a functional group having 1 to 6 carbon atoms. From the viewpoint of a higher flash point, the number of carbon atoms in the R groups may be less than 8, or equal to or less than 6.

According to one embodiment, at least one of the three R groups may not be hydrogen. In other words, at least one of the R groups may be the functional group having 1 to 10 carbon atoms. Specifically, at least two of the R groups may not be hydrogen but functional groups. More specifically, the R groups may not be hydrogen but all be functional groups. In this case, the three R groups may be independent of each other as well. Even more specifically, the R groups may be each independently a functional group having 1 to 6 carbon atoms. From the viewpoint of improvement in the performance of a thermal management fluid, including the additive, each of the R groups may be functional groups, none of which is hydrogen. Specifically, the improvement in the performance may involve improvements in flame retardancy, electrical conductivity, and/or corrosiveness.

In addition, according to one embodiment, the total number of carbon atoms in the compound may be in the range of 1 to 30. Specifically, the total number of carbon atoms may be in the range of 1 to 24, more specifically 1 or more and less than 24, even more specifically in the range of 1 to 21, and far more specifically in the range of 1 to 18. From the viewpoint of a higher flash point, the total number of carbon atoms may be less than 24, or less than or equal to 21.

For example, the functional group may be a hydrocarbyl group. From the viewpoint of chemical stability, the functional group may be an alkyl group. The functional group may be straight-chain, branched-chain, or cyclic alkyl. Alternatively, the functional group may include an aromatic group.

According to another embodiment, the R groups may further include a heteroatom. For example, the R groups may further include O, N, S, P, B, F, Cl, Br, I, or a combination thereof. Specifically, the R groups may further include one or more halogen atoms. The R group may be a halogen atom-substituted alkyl group. More specifically, the R groups may further include F.

The use of the additive in a thermal management fluid may increase the flash point of the fluid. The phosphate-based compound in the additive may remove radicals and form char layers. In addition, when added to a thermal management fluid for use, it is considered that the phosphate-based compound removes combustible radicals generated by the oxidation of base oil, thus increasing the flash point.

According to one embodiment, the additive may satisfy ΔFP of at least 10°C. In this case, ΔFP means (the flash point of a fluid including the additive) - (the flash point of a fluid free of the additive). In the present disclosure, the flash point of the fluid is measured according to ASTM D93. The ΔFP value refers to the maximum ΔFP value when the amount of the additive included in the fluid is in the range of more than 0 wt% and 10 wt% or less. Specifically, the ΔFP may be in the range of 10 to 60, more specifically in the range of 15 to 60, and even more specifically in the range of 15 to 55.

Hence, ΔFP refers to the change in flash point caused by adding the additive to the fluid. It's calculated as the difference between the FP of the fluid with the additive and the FP of the fluid without the additive. So, for example, if the fluid originally has a flash point of 50°C and after adding the additive the FP rises to 65°C, then the *ΔFP* = 15°C.

The additive of the present disclosure may increase the flash point by at least 10°C, and, thus, enhances significantly the fluid's safety by making it less prone to ignition at lower temperatures.

The additive described above increases the flash point of a thermal management fluid, which may lead to an expectation that an effect of improving safety, for example, by delaying thermal runaway, can be achieved in systems where such a fluid is used. In addition, the additive enables the use of base oils, which have conventionally been unsuitable for use in thermal management fluids due to their low flash point, in thermal management fluids, thus improving the selectivity and extending the scope of base oils applicable in thermal management fluids.

### Thermal Management Fluid Composition

The present disclosure provides a thermal management fluid composition including the aforementioned additive (that is, a phosphate-based additive) for a thermal management fluid. Hereinafter, it should be noted that the foregoing description is applicable in terms of the additive for a thermal management fluid, and redundant descriptions may be omitted. The thermal management fluid composition has excellent physical properties such as insulation and cooling performance, and thus is capable of cooling electronic devices by making direct contact with such devices. In other words, the composition is usable as an immersion cooling fluid. For example, the fluid can safely surround and cool components like CPUs and GPUs without causing electrical shorts, making it ideal for high-performance systems where traditional air cooling may fall short.

The composition includes a base oil and one or more phosphate-based compounds. The base oil may include a mineral oil, a synthetic oil, or a combination thereof. The mineral oil refers to oil derived from crude oil without undergoing a separate synthetic process. In the present disclosure, the mineral oil may include base oils corresponding to at least one of the Groups I to III according to the American Petroleum Institute (API) classification. The synthetic base oil includes, for example, polyalphaolefin (PAO) or ester base oil. In one embodiment, the base oil may include the mineral oil as the major base oil and the synthetic base oil as the minor base oil. In the present disclosure, the major base oil refers to a base oil the content of which exceeds 50 wt% of the total base oil content. In another embodiment, the base oil may be the mineral oil.

Typically, PAO exhibits superior performance compared to mineral oil, but is expensive, which is disadvantageous.

By including the aforementioned phosphate-based additive, the composition of the present disclosure may achieve at least equivalent performance as a thermal management fluid despite using the mineral oil as the base oil, compared to when using only PAO. In addition, there may be an expectation that a relatively inexpensive price can be achieved. The ester base oil has excellent thermal conductivity but is polar, so that its insulation performance is poorer than that of the mineral oil. The ester base oil is hence vulnerable to moisture due to the increased likelihood of hydrolysis and moisture-induced structural degradation. Thus, the ester base oil is less suitable for use as the major base oil.

According to one embodiment, the base oil may have a content of at least 80 wt% with respect to the total weight of the composition. Specifically, the content of the base oil may be 80 wt% or more and less than 100 wt% with respect to the total weight of the composition. More specifically, the content of the base oil may be 90 wt% or more and less than 100 wt% with respect to the total weight of the composition. Even more specifically, the content of the base oil may be in the range of 90 to 98 wt% with respect to the total weight of the composition.

When the content of the base oil is low, the amount of the additive used, which is expensive compared to the base oil, may increase, leading to a problem where the price of the final product increases. In addition, the dielectric constant of the final product may increase, leading to an increase in electrical conductivity and deterioration in material compatibility (such as corrosion). As a result, there may be a problem where the use of the composition as an immersion cooling fluid becomes challenging.

The base oil of the present disclosure is not particularly limited as long as it is usable as the thermal management fluid or immersion cooling fluid. Furthermore, the addition of the phosphate-based compound may increase the flash point of such a fluid, so it is considered that oils having a lower flash point than base oils used in existing thermal management fluids are usable as novel base oils.

The composition includes the one or more phosphate-based compounds. The one or more phosphate-based compounds may be the aforementioned compound of Chemical Formula 1. The one or more phosphate-based compounds defined by [Chemical Formula 1] are particularly suitable due to their hydrolytic stability and high compatibility with many other chemicals used in cooling systems such as non-oxidizing biocides, chlorine etc.

According to one embodiment, the phosphate-based compound may have a content of more than 0 wt% and 10 wt% or less with respect to the total weight of the composition. For example, the content of the compound may be in the range of 0.1 to 10 wt%, 0.5 to 10 wt%, 1 to 10 wt%, 2 to 10 wt%, 3 to 10 wt%, 4 to 10 wt%, 5 to 10 wt%, 0.1 to 9 wt%, 0.5 to 9 wt%, 1 to 9 wt%, 2 to 9 wt%, 3 to 9 wt%, 4 to 9 wt%, 5 to 9 wt%, 0.1 to 8 wt%, 0.5 to 8 wt%, 1 to 8 wt%, 2 to 8 wt%, 3 to 8 wt%, 4 to 8 wt%, 5 to 8 wt%, 0.1 to 7 wt%, 0.5 to 7 wt%, 1 to 7 wt%, 2 to 7 wt%, 3 to 7 wt%, 4 to 7 wt%, 5 to 7 wt%, 0.1 to 6 wt%, 0.5 to 6 wt%, 1 to 6 wt%, 2 to 6 wt%, 3 to 6 wt%, 4 to 6 wt%, or 5 to 6 wt%. Specifically, the content of the compound may be in the range of 1.5 to 10 wt%. From the viewpoint of increasing the flash point, the content of the compound may be at least 1.5 wt%. When the content of the compound exceeds the aforementioned numerical values, there may be a problem in that the flash point of the composition becomes lower than the flash point of a thermal management fluid composition free of the phosphate-based compound. A lower flash point means the fluid can ignite at lower temperatures, raising the likelihood of fire hazards during operation or storage.

The composition may further include another (second) additive in addition to the phosphate-based compound. In this case, this additive refers to an additive that differs from the additive for a thermal management fluid discussed above and may also be expressed as a "second additive" in the present disclosure for the purpose of distinction.

The second additive is not particularly limited as long as it is usable to improve the physical and/or chemical properties of a thermal management fluid. For example, the second additive may include an antioxidant, an antifoaming agent, a corrosion inhibitor, a detergent additive, a dispersant, a friction modifier, an anti-wear agent, an extreme pressure additive, a viscosity index improver, a pour point depressant, a viscosity modifier, or any combination thereof.

In one embodiment, the second additive may have a total content in the range of 0 to 10 wt% with respect to the total weight of the composition. For example, the content of the second additive may be in the range of 0.01 to 10 wt%, 0.05 to 10 wt%, 0.1 to 10 wt%, 0.2 to 10 wt%, 0.5 to 10 wt%, 1 to 10 wt%, 0.01 to 7 wt%, 0.05 to 7 wt%, 0.1 to 7 wt%, 0.2 to 7 wt%, 0.5 to 7 wt%, 1 to 7 wt%, 0.01 to 5 wt%, 0.05 to 5 wt%, 0.1 to 5 wt%, 0.2 to 5 wt%, 0.5 to 5 wt%, or 1 to 5 wt% with respect to the total weight of the composition. Specifically, the content may be in the range of 0 to 5 wt% with respect to the total weight of the composition.

As described above, the flash point of the fluid composition is increased by the addition of the phosphate-based compound. Specifically, the flash point of the fluid composition, including the compound, may be higher than that of a composition free of the compound by 9°C or more, and even by at least 10°C. More specifically, such a difference in flash point may be in the range of 10°C to 60°C, more specifically in the range of 15°C to 60°C, and even more specifically in the range of 15°C to 55°C. In the present disclosure, the flash point may be measured according to ASTM D93.

In other words, according to one embodiment, the flash point of the composition may be at least 190°C. The flash point may be specifically in the range of 190°C to 250°C, and more specifically in the range of 195°C to 250°C, and even more specifically in the range of 195°C to 242°C.

The kinematic viscosity of the fluid composition may be reduced by the addition of the phosphate-based compound. Specifically, the kinematic viscosity (at 40°C) of the fluid composition, including the compound, may be reduced by at least 1 cSt (10⁻⁶ m²/s). More specifically, the kinematic viscosity may be reduced by at least 1.5 cSt (at least 1.5·10⁻⁶ m²/s) at a constant temperature of 40°C.

As described above, the use of the additive for a thermal management fluid of the present disclosure increases the flash point of the fluid, thus leading to an expectation that an effect of improving safety, for example, by delaying thermal runaway, can be achieved when applied to immersion cooling and other systems. In addition, the use of the additive reduces the viscosity of the fluid compared to base oil, so that power consumption can be reduced when applied to immersion cooling and other cooling systems. The additive is applicable through simple addition to existing thermal management fluids and thus is expected to be usable for various purposes.

Hereinafter, examples of the present disclosure will be further described with reference to specific experimental examples. However, the examples and comparative examples contained in the experimental examples are only to illustrate the present disclosure and do not limit the appended claims. It is apparent to those skilled in the art that various changes and modifications of the examples are possible.

### Examples

### 1. Preparation of Phosphate-Based Compounds

Phosphate-based compounds (P1 to P5) to be used in the following experiment were prepared. The specific chemical structure of each compound is as shown in FIG. 1.
- P1: Triethyl phosphate (TCI)
- P2: Tripropyl phosphate (Sigma Aldrich)
- P3: Tributyl phosphate (Samchun Chemicals)
- P4: Tris(2-ethylhexyl) phosphate (TCI)
- P5: 2-ethylhexyl diphenyl phosphate (TCI)

### 2. Observation of Changes in Physical Properties with Addition of Phosphate-Based Compounds

Two types of base oil (Base oil A(YUBASE 3, SK Enmove) and Base oil B(YUBASE 6, SK Enmove)) were prepared. A specific amount of Compound P1 or P2 was added to each type of base oil to observe changes in physical properties with the addition of the compound. The respective physical properties were measured using the following equipment and/or methods.
- Closed-cup flash point: ASTM D93 Method
- Electrical conductivity: Flucon's Epsilon+/ IEC 60247
- Kinematic viscosity: Cannon's CAV2000/ ASTM D445-01; it is noted that the unit of centistokes (cSt) is equivalent to 10⁻⁶ m²/s in the International System of Units (SI).

The measurement results are shown in Table 1 below.

**[Table 1]**

| Composition | Base oil | Additive, Content | Closed-cup flash point (°C) | Kinematic viscosity (at 40°C, cSt) | Electrical conductivity (at 40°C, nS/m) |
|---|---|---|---|---|---|
| C1 | A | - | 184.0 | 12.00 | < 0.01 |
| C2 | B | - | 221.0 | 35.16 | < 0.01 |
| 1 | A | P1, 2.5 wt% | 208.0 | 10.92 | < 0.01 |
| 2 | A | P1, 5.0 wt% | 198.5 | 10.08 | < 0.01 |
| 3 | A | P2, 5.0 wt% | 222.5 | 10.47 | < 0.01 |
| 4 | B | P2, 5.0 wt% | 231.5 | 28.54 | < 0.01 |

Referring to Table 1, it is found that the addition of the phosphate-based compound of the present disclosure does not affect or increase the electrical conductivity while increasing the flash point and reducing the kinematic viscosity. From the viewpoint that such a reduction in kinematic viscosity can reduce the power consumption of a pump required for fluid to flow, there may be a beneficial effect provided.

### 3. Observation of Changes in Flash Point Depending on Amounts of Phosphate-Based Compounds Added

### (1) Base Oil A

Different contents of P1 to P5 were added to Base oil A to observe changes in flash point depending on the amounts of the compounds added. The measurement results are shown in Table 2 below.

**[Table 2]**

| Composition | Additive | Content | Flash point (°C) | Delta Δ (°C) |
|---|---|---|---|---|
| AC1 | - | - | 184.0 | 0.0 |
| A1 | P1 | 2.5 wt% | 208.0 | 24.0 |
| A2 | P1 | 5.0 wt% | 198.5 | 14.5 |
| A3 | P2 | 2.5 wt% | 223.5 | 39.5 |
| A4 | P2 | 5.0 wt% | 222.5 | 38.5 |
| A5 | P3 | 5.0 wt% | 231.5 | 47.5 |
| A6 | P3 | 10.0 wt% | 235.0 | 51.0 |
| AC2 | P4 | 2.5 wt% | 187.0 | 3.0 |
| AC3 | P4 | 5.0 wt% | 187.5 | 3.5 |
| AC4 | P5 | 5.0 wt% | 190.0 | 6.0 |

### (2) Base Oil B

Different contents of P2 and P3 were added to Base oil B to observe changes in flash point depending on the amounts of the compounds added. The measurement results are shown in Table 3 below.

**[Table 3]**

| Composition | Additive | Content | Flash point (°C) | Delta Δ (°C) |
|---|---|---|---|---|
| BC1 | - | - | 221.0 | 0.0 |
| B1 | P3 | 2.5 wt% | 240.0 | 19.0 |
| B2 | P3 | 5.0 wt% | 230.0 | 9.0 |
| B3 | P3 | 10.0 wt% | 230.0 | 9.0 |
| B4 | P2 | 2.5 wt% | 241.5 | 20.5 |
| B5 | P2 | 5.0 wt% | 231.5 | 10.5 |

Referring to Tables 2 and 3, it can be observed that the flash point becomes higher than that of existing base oils by the addition of the phosphate-based compounds of the present disclosure. Especially in the case of P1 to P3, it is found that the flash point increases by 9°C or more.

In addition, referring to Table 3, it is found that the addition of the additive of the present disclosure can provide an effect of increasing the flash point even for base oils having a high flash point of 200°C or more.

Referring to Tables 2 and 3, it can be observed that the content of the additive having the maximum ΔFP value may differ for each additive. It is considered that the maximum ΔFP value is affected by the lower flammability limit (LFL) of the additive.

As confirmed from the above examples, the phosphate-based compound of the present disclosure can be used as an additive for a thermal management fluid and thus be applied in various fields by improving various physical properties of the fluid.

The above description is merely an example to which the principles of the present disclosure are applied, and other configurations may be further included.

## Claims

1. An additive for a thermal management fluid, the additive comprising:
a phosphate-based compound.

2. The additive according to claim 1, wherein the phosphate-based compound satisfies Chemical Formula 1 below, 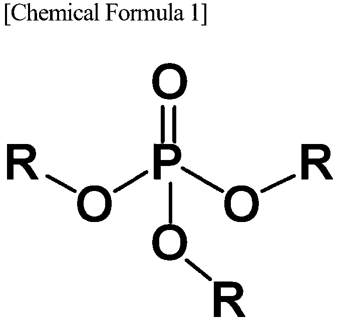 wherein the R groups are each independently hydrogen or a functional group comprising 1 to 10 carbon atoms.

3. The additive according to claim 2, wherein at least one of the R groups is the functional group comprising 1 to 10 carbon atoms, preferably wherein the R groups are each independently a linear or a branched alkyl group comprising 1 to 10 carbon atoms or an aromatic group comprising 10 or less carbon atoms or comprising 6 or less carbon atoms.

4. The additive according to claim 2 or 3, wherein the R groups are each independently a functional group comprising 1 to 6 carbon atoms, preferably wherein the R groups are each independently a linear alkyl group comprising 1 to 6 carbon atoms.

5. The additive according to any one of claims 2 to 4, wherein the R groups further comprise a heteroatom selected from the group consisting of O, N, S, P, B, F, Cl, Br, I, and a combination thereof.

6. The additive according to any one of the preceding claims, wherein the heteroatom is a halogen atom, preferably F.

7. The additive according to any one of the preceding claims, wherein the additive satisfies ΔFP of 9°C or more, preferably at least 10°C,
wherein ΔFP = (a flash point of a fluid comprising the additive) - (a flash point of a fluid free of the additive), measured according to ASTM D93 method.

8. A thermal management fluid composition comprising:
a base oil; and
one or more phosphate-based compounds.

9. The composition according to claim 8, wherein the phosphate-based compound is as defined in any one of claims 2 to 7.

10. The composition according to claim 8 or 9, wherein the base oil is a mineral oil.

11. The composition according to any one of claims 8 to 10, wherein the base oil has a content of at least 80 wt% with respect to the total weight of the composition, and/or
wherein the phosphate-based compound has a content of more than 0 wt% and 10 wt% or less.

12. The composition according to any one of claims 8 to 11, wherein the composition further comprises a second additive that is different from the one or more phosphate-based compounds, optionally wherein the second additive comprises an antioxidant, an antifoaming agent, a corrosion inhibitor, a detergent additive, a dispersant, a friction modifier, an anti-wear agent, an extreme pressure additive, a viscosity index improver, a pour point depressant, a viscosity modifier, or a combination thereof.

13. Use of a phosphate-based compound for a thermal management fluid, optionally for cooling and heating systems, in particular for immersion cooling for immersion cooling devices or systems.

14. The use according to claim 13, wherein the phosphate-based compound is as defined in any one of claims 2 to 7.

15. Use of a phosphate-based compound as defined by Chemical Formula 1, 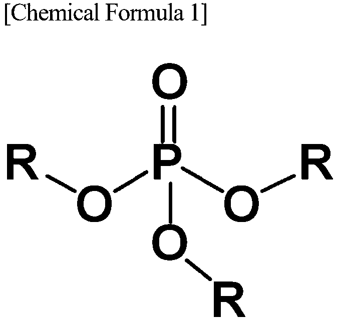
wherein the R groups are each independently hydrogen or a functional group comprising 1 to 10 carbon atoms,
to increase the flash point of a fluid composition by adding the compound to a base oil,
and/or to reduce the kinematic viscosity of a fluid composition by adding the compound to a base oil.
